Europäisches Patentamt

European Patent Office

Office européen des brevets

(11) Numéro de publication: **0 528 920 B1**

# FASCICULE DE BREVET EUROPEEN

(45) Date de publication de fascicule du brevet: **15.03.95**  (51) Int. Cl.⁶: **B29C 53/28**, D06J 1/04

(21) Numéro de dépôt: **91909513.3**

(22) Date de dépôt: **25.04.91**

(86) Numéro de dépôt internationale :
**PCT/FR91/00343**

(87) Numéro de publication internationale :
**WO 91/17038 (14.11.91 91/26)**

(54) **DISPOSITIF DE PLISSAGE DE FILM EN CONTINU POUR REALISER DES PLIS COUCHES ET AMENAGEMENTS POUR LA REALISATION DE ZONES SANS PLIS.**

(30) Priorité: **30.04.90 FR 9005747**
    **26.06.90 FR 9008304**

(43) Date de publication de la demande:
**03.03.93 Bulletin 93/09**

(45) Mention de la délivrance du brevet:
**15.03.95 Bulletin 95/11**

(84) Etats contractants désignés:
**AT BE CH DE DK ES FR GB GR IT LI LU NL SE**

(56) Documents cités:
| | |
|---|---|
| **BE-A- 482 701** | **DE-B- 1 460 606** |
| **GB-A- 1 571 358** | **US-A- 2 429 482** |
| **US-A- 3 947 206** | **US-A- 3 991 994** |
| **US-A- 4 153 664** | |

(73) Titulaire: **Capy, Gilbert**
**La Botte**
**Jarnioux**
**F-69640 Denice (FR)**

Titulaire: **Buchberg, Akiva**
**30 bis, rue de Tilsitt**
**F-75017 Paris (FR)**

(72) Inventeur: **Capy, Gilbert**
**La Botte**
**Jarnioux**
**F-69640 Denice (FR)**
Inventeur: **Buchberg, Akiva**
**30 bis, rue de Tilsitt**
**F-75017 Paris (FR)**

(74) Mandataire: **Schmitt, John**
**Cabinet John Schmitt**
**9, rue Pizay**
**F-69001 Lyon (FR)**

## Description

L'invention concerne un procédé de plissage en continu d'une feuille mince avec des plis dissymétriques, permettant d'atteindre des hautes cadences, notamment pour réaliser des emballages de corps convexes comme décrits par le brevet FR-A-2595666 utilisant des films complexes minces plissés; les plis dissymétriques étant fixés au voisinage de leur extrémité, suivant une bande étroite ayant une direction sensiblement perpendiculaire à la direction des plis.

On connaît des machines à plisser les tissus qui comportent un peigne animé d'un mouvement alternatif pour former le pli; ce peigne glisse l'extrémité du pli entre deux rouleaux qui l'écrasent. Ensuite les plis peuvent éventuellement être fixés entre eux sur toute ou partie de leur largeur par divers moyens tels que le collage d'une bande adhésive. Des machines peuvent être aussi utilisées pour plisser des papiers ou des films minces complexes à base de papier ou non, comme décrit dans le brevet US-A-3947206, au moyen de roues dentées.

Le problème est que si ces machines sont d'une très grande souplesse qui permet de faire des petites séries, les cadences de production sont vite limitées par les mouvements du peigne lorsqu'il s'agit de production de grande serie. En effet, dès que l'on veut accélérer la cadence, les accélérations et décélérations auxquelles sont soumises le peigne augmentent et il y a risque de blesser et même de déchirer le film à plisser. D'où la nécessité de rechercher une machine travaillant à haute cadence et qui ne soit pas agressive pour les films. Un des moyens de réduire l'agressivité du dispositif de plissage vis à vis du film est de diminuer leurs vitesses relatives. C'est la raison pour laquelle l'invention que l'on va décrire utilise un dispositif de plissage continu.

On va décrire un dispositif permettant de faire principalement des plis dissymétriques parallèles.

La Fig.1 représente une feuille formée de plis qui une fois couchés les uns sur les autres forment des plis dissymétriques.

La Fig.2 représente la feuille plissée précédentes avant le regroupage des plis.

La Fig.3 représente la feuille plissée avec ses plis couchés et dissymétriques.

La Fig.4 représente les principaux composants du dispositif de plissage, dans une des variantes décrites dans l'invention.

La Fig.5 représente le détail du dispositif de préformage des plis sur une roue dentée.

La Fig.6 représente le détail du transfert et du regroupement des plis de la roue dentée vers la roue de regroupement des plis.

La Fig.7 représente le détail du transfert d'une roue de regroupement des plis, représentée Fig.8 conçue pour permettre le redéploiement d'un pli à intervalles réguliers.

La Fig.8 représente la roue de regroupement des plis conçue pour permettre le redéploiement d'un plis à intervalles réguliers, avec son système d'entraînement.

La Fig.9 représente le détail de la roue dentée permettant de réaliser à intervalles régulier une zone sans plis.

La Fig.10 représente le profil d'une roue de regroupement des plis formés par une roue dentée du type décrit Fig.9 avec notamment les zones d'escamotage des zones sans plis.

La Fig.11 représente le détail de la roue de regroupement des plis décrite en Fig.10 au niveau de la zone de transfert du film à partir de la roue dentée.

La Fig.12 représente, en coupe perpendiculaire à son axe de rotation, la roue de resserrage des plis, suivant l'invention, en position entre la roue dentée de préformage des plis et la roue de regroupage des plis.

La Fig.13 représente, en perspective, un secteur de la roue de resserrage des plis.

La Fig.14 représente une coupe de la roue suivant un plan passant par les axes (116) et (140) des roues de resserrage des plis et d'entraînement.

La Fig.15 représente une variante de la roue de resserrage des plis permettant d'obtenir des zones sans plis.

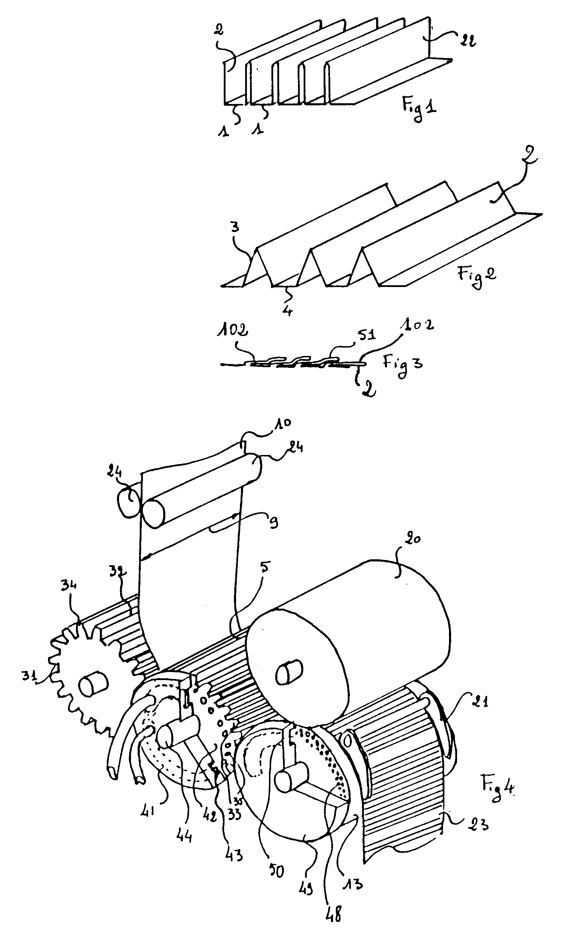

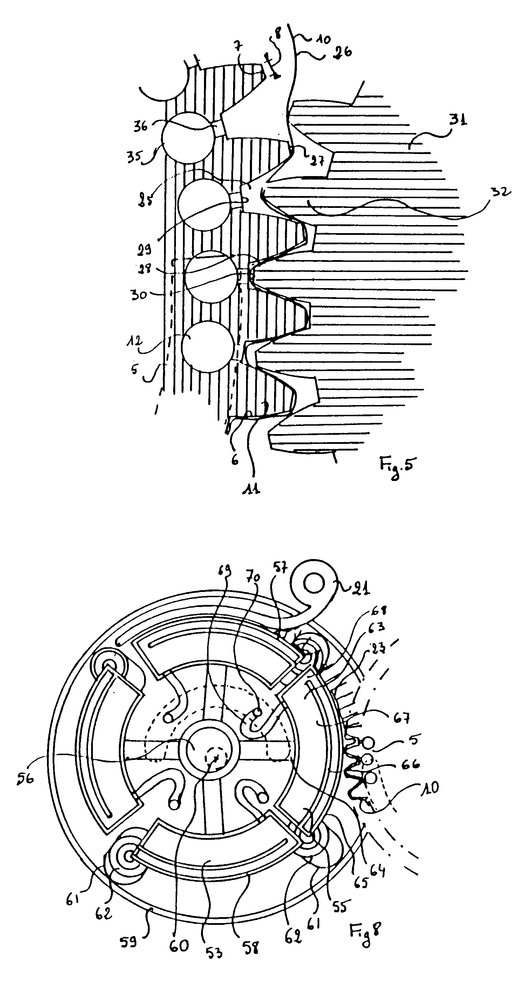

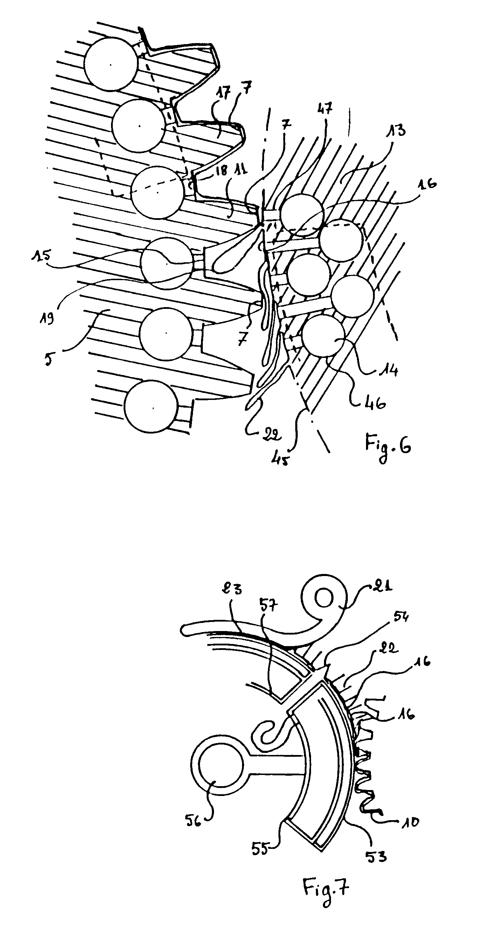

Chaque pli est composé de deux bandes successives de largeurs différentes; on pose comme hypothèse que la bande de plus petite largeur a une largeur "A" et que l'autre a une largeur "B"; on peut décomposer le pli en une bande de largeur "B-A" (1) Fig.1 suivi de deux bandes de largeur "A" (2); si on positionne par pliage les deux bandes de largeur "A" (2) sensiblement perpendiculairement aux bandes de largeur "B-A" (1), on constate que ces dernières sont sensiblement placées côte à côte simplement et séparées par un pli vertical (3) de hauteur sensiblement égale à "A"; si on écarte ces bandes "B-A" (4) Fig.2 parallèlement à elles mêmes, le pli vertical (3) s'écarte pour former un profil en forme de "V" renversé. Le principe de la machine consiste donc à positionner les bandes de largeur "B-A" (4) sur le film à plisser, ensuite à rapprocher ces bandes (4) pour les amener côte à côte Fig.1, puis à coucher le pli de hauteur "A" Fig.3 qui les sépare, pour obtenir le pli terminé. Il reste alors à fixer les plis entre eux et éventuellement à faire des zones sans plis pour permettre la séparation facile de longueurs de feuilles plissées successives.

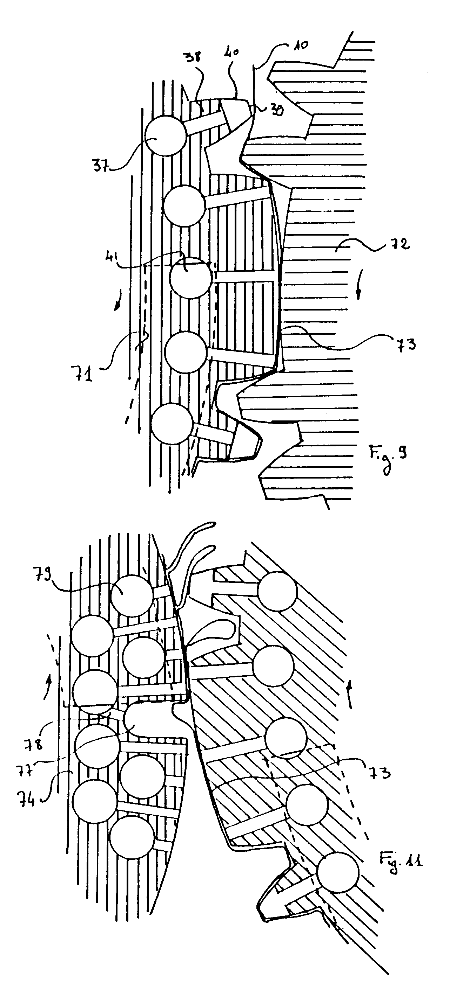

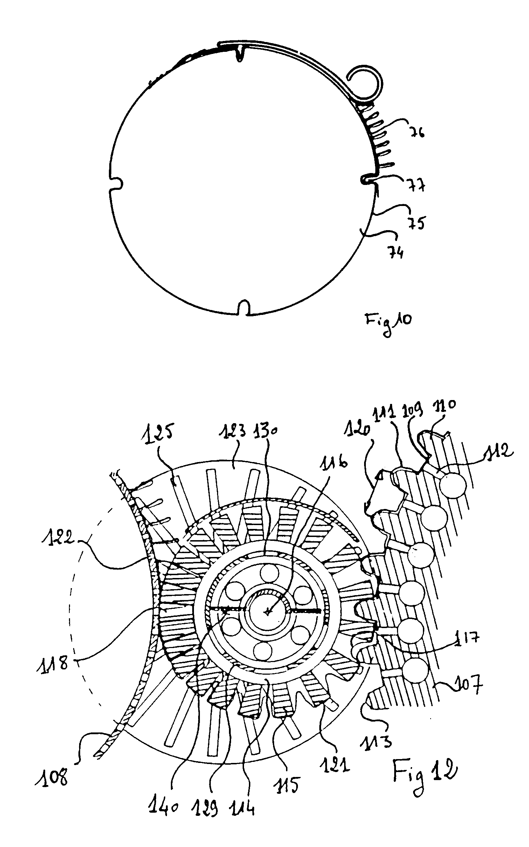

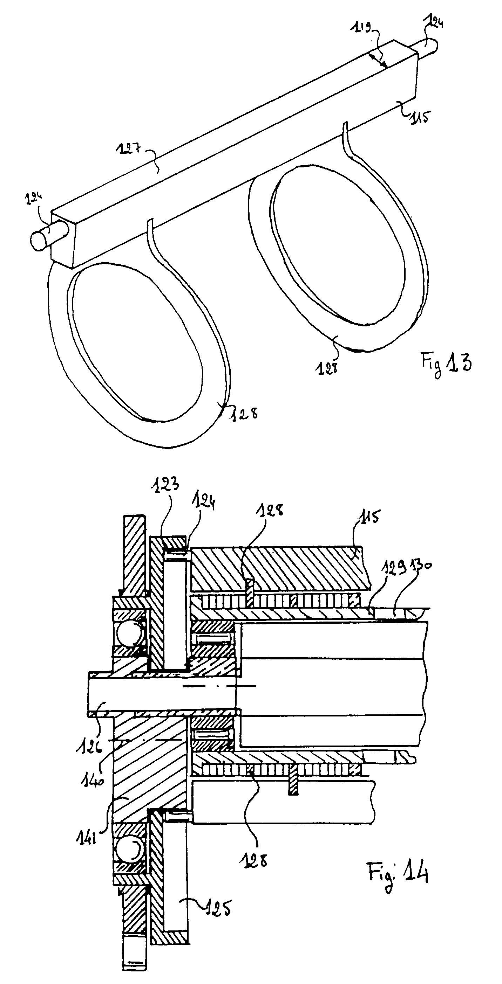

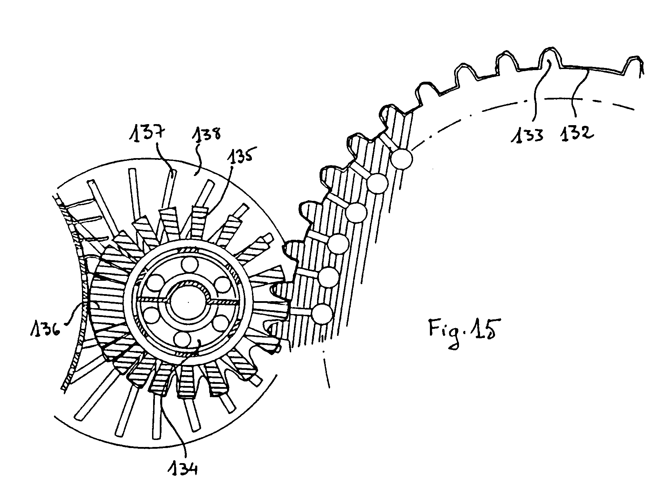

Le repérage des bandes de largeur "B-A" consiste à faire épouser au film le profil (6) Fig.5 d'une roue dentée (5); le sommet (7) de chaque dent a une largeur (8) sensiblement égale ou inférieure à "B-A" tandis que la longueur du profil de dent séparant deux sommets (7) a une longueur sensiblement égale ou supérieure à "2A"; cette roue dentée (5) Fig.4 a une largeur sensiblement supérieure à la largeur (9) de la bande de film (10) à plisser; un moyen de maintenir le film (10) Fig.6 en place sur les dents consiste à mettre un dispositif d'aspiration (12) à la base de chaque dent qui maintient le film (10) plaqué sur cette dernière; ensuite le film (10) est transféré sur une roue de regroupage des plis (13) Fig.4, sensiblement cylindrique de révolution elle-même munie sur toute sa surface d'un dispositif d'aspiration (14) Fig.6; cette roue de regroupage des plis (13) vient frûler le sommet (7) des dents (11); si on a pris soin de casser le vide à la base aval (15) de la dent (11) au moment où cette dernière vient frûler la roue de regroupage des plis (13), la partie du film (10) recouvrant le sommet (7) de la dent (11) et de largeur égale ou inférieure à "B-A" vient se plaquer sur la roue de regroupage des plis (13); comme cette roue de regroupage des plis (13) tourne moins vite que la roue dentée (5), le sommet (7) de la dent suivante (17) se rapproche de la bande de film de largeur "B-A" (16) que l'on vient de déposer; si on casse le vide dans l'espace (18) situé entre les deux dents (11) et (17), lorsqu'on estime que la bande de largeur "B-A" (16) suivante est à sa place, la bande de film recouvrant la dent suivante est transférée sur la roue de regroupage des plis par aspiration; on obtient ainsi deux bandes de largeur sensiblement égale à "B-A" (16) positionnées côte à côte reliées par une boucle (19) de longueur "2A" et qui formera une fois aplati le pli (22) de hauteur "A" de forme semblable à ceux décrits en Fig.1; les bandes de largeur "B-A" (16) étant maintenues fermement par l'aspiration (14) il est possible de coucher les plis (22) par l'emploi de glissières (21) Fig.7 et ou de rouleaux (20) Fig.4 et de les fixer entre eux de manière à ce qu'il soient maintenus ensembles lorsque le film plissé (23) est détaché de la roue de regroupage des plis (13); la liste d'opérations qu'il est possible de réaliser à ce stade n'est pas limitative (par exemple: rainage, pose de bandes adhésives, dépose de colle etc...).

Il est important que le film (10) Fig.4 épouse la forme de la roue dentée (5); deux rouleaux (24) situés en amont débitent à vitesse sensiblement constante une bande de film (10) de manière à ce qu'il ne soit pas tendu; la bande de film (10) Fig.5 se dépose sur le sommet (7) des dents (11) de la roue dentée (5), dont la vitesse est synchronisée avec celle des rouleaux (24), et obture partiellement l'espace (25) situé entre deux dents (11) successives; lorsque le dispositif d'aspiration (12) situé entre deux dents (11) successives, se met en marche, le film (10) est aspiré au fond de la gorge (29) séparant les deux dents (11), et pour cela tire sur la partie amont (26) du film (10) en le faisant glisser sur le sommet (27) des dents sur lequel il est posé; la partie amont (28) du film (10) est bloquée par le dispositif d'aspiration (12) situé au fond de la gorge précédente (30); la forme de la gorge (29) peut être variable et précisée expérimentalement; on mettra de bonnes dépouilles et on évitera les angles vifs pour ne pas blesser le film. Pour faciliter le couchage des plis sur la roue (13), on a intérêt à marquer les plis situés à la base et au sommet du "V" renversé (3) Fig.2, notamment lorsque le film est à base de papier; pour obtenir ce résultat on utilise la phase où le film est sur la roue dentée (5) pour marquer les plis en combinant la forme des dents et la forme de rouleaux qui viendront s'appuyer dessus.

Il se peut que le dispositif décrit ne soit pas assez performant pour la cadence envisagée; on peut compléter le dispositif de mise en place du film dans la gorge en plaçant une deuxième roue dentée (31) Fig.4 en vis à vis entraînée par la roue dentée (5) initiale; le film (10) Fig.5 passe entre les deux roues dentées (5) et (31); cette roue (31) dispose de dents (32) qui viennent s'enfoncer entre les dents (11) de la roue dentée initiale (5) de manière à pousser mécaniquement le film (10) au fond de la gorge (29) tandis que le dispositif d'aspiration (12) prend le relai; la deuxième roue dentée (31) peut être conçue pour ne pas avoir de contacts avec les dents (11) de la première roue dentée (5), et elle doit alors être entraînée par cette dernière par un dispositif mécanique indépendant; elles peuvent être constituées de roues dentées formées d'engrenages droits à développante de cercle, et c'est la première roue dentée (5) qui entraîne la seconde (31); dans ce type d'engrenage les dents (11) et (32) roulent l'une sur l'autre; le film (10) se trouve donc pincé entre les deux dents (11) et (32) en contact; l'effort de pincement est fonction du couple de freinage exercé sur la deuxième roue (31); ce couple de freinage doit être faible s'il y a plusieurs dents consécutives (11) et (31) engrenées car, suivant la taille respective des roues dentée (5) et (31), le film doit pouvoir plus ou moins glisser entre les dents (11) et (32); une des façons d'empêcher le film de se déchirer au moment du glissement consiste à ne garder un contact entre les dents qu'au voisinage des extrémités latérales (33) et (34) des dents (11) et (32) des roues dentées (5) et (31), dans une zone où il n'y a pas de film (10) entre les dents , les dents (11) et (32) n'étant plus en contact par une modification de leur profil dans leur partie centrale; lorsque la dent (32) de la deuxième roue dentée (31) se trouve dans l'axe de la gorge (30) correspondante de la première roue dentée (5), le dispositif d'aspiration (12) permet de maintenir le film en place; ce dernier est maintenu en place par dépression jusqu'à ce que le sommet (7) Fig.6 de la dent (11) suivant la gorge (15) considérée passe au voisinage de la roue de regroupage des plis (13); à ce moment le vide est cassé et le film transféré. La roue dentée (31) peut aussi être utilisée pour d'autres fonctions notamment pour réaliser le rainage du film afin de faciliter le couchage des plis.

Le vide dans la roue dentée (5) Fig.5, être assuré par un évidement cylindrique (35) situé sous la gorge (25) séparant les dents (11) et dont les génératrices sont parallèles à ces dernières; l'évidement cylindrique (35) communique avec le fond de la gorge (29) par des conduits (36) régulièrement répartis sur la longueur de la gorge (29); on peut, dans une autre variante, faire communiquer les évidements (37) Fig.9 qui sont alors situés sous les dents (38) avec le sommet (39) des dents (38), par des conduits régulièrement répartis sur leur longueur; les évidements peuvent être débouchants sur la paroi latérale (40) de la roue dentée et sont en communication avec une boîte à vide (41) Fig.4 fixe; cette dernière (41) est plaquée sur la paroi latérale (42) de la roue dentée (5) et possède une ou plusieurs cavités (43) dont la forme permet de ne faire le vide que sur une partie des évidements (35); cette boîte (41) peut pivoter légèrement autour d'un axe parallèle à l'axe de rotation (44) de la roue dentée (5) de manière à pouvoir ajuster avec précision les moments où il faut créer le vide et celui où il faut le casser, en tenant compte des inerties; on peut avoir besoin dans certains cas de mettre une légère surpression d'air pour faciliter le décollage du film des parois des dents (11) de la roue dentée (5) sur lesquelles il est plaqué; dans certains cas on pourra avoir à tailler des sillons, sur la paroi des dents (11), qui communiquent avec les orifices de vide de manière à pouvoir au moment où l'on casse le vide, injecter de l'air entre la paroi et le film, afin d'accélérer sont décolement et éviter les phénomènes de succion.

La roue de regroupage des plis (13) Fig.4 est un cylindre de sensiblement de révolution disposant sur sa paroi cylindrique (45) Fig.6 d'un dispositif d'aspiration (14) permettant de maintenir en place côte à côte les bandes de largeur "B-A" (16) qui recouvraient le sommet (7) des dents (11) de la roue (5); leur vitesse est synchronisée de manière à ce que lorsqu'un point de la surface de la roue de regroupage des plis (13) parcourt une distance égale à "B-A", un point situé au sommet (7) d'une dent (11) de la roue dentée (5) parcourt la distance correspondant au pas des dents; lorsque la dent (11) a déposé sa bande de film de largeur "B-A" (16) sur la roue de regroupage des plis (13), comme sa vitesse tangentielle est supérieure à celle de la roue de regroupage des plis (13), elle pousse le pli (19) qu'elle vient de former devant elle au risque d'arracher la bande de largeur "B-A" (16) de la roue de regroupage des plis (13); pour limiter cet inconvénient on s'arrangera pour utiliser une roue dentée (5) avec un faible nombre de dents (11) pour que la dent s'éloigne rapidement de la surface (45) de la roue de regroupage des plis (13) qui aura elle-même le diamètre minimum requis permettant de coucher puis de fixer les plis.

Le dispositif de vide (14) Fig.6 de cette roue de regroupage des plis (13) peut être fait de diverses manières; il est important que le débit d'aspiration soit important au voisinage du transfert des bandes "B-A" (16); dans toute la zone où les bandes de film de largeur "B-A" (16) sont jointives, il n'y a pratiquement pas de débit d'air; il faut donc s'arranger pour que la pénétration d'air dans le circuit de vide (14) se fasse préférentiellement par la zone de transfert des bandes (16); ce qui suppose qu'en amont de cette zone , là où il n'y a pas de film pour boucher les trous, on soit isolé du circuit de vide et à la pression atmosphérique; et cette zone commence au moment où le film plissé est séparé de la roue dentée (5); une manière de réaliser ce vide est d'opérer comme pour la roue dentée (5) avec des évidements cylindriques (46), parallèles aux génératrices de la surface cylindrique de la roue de regroupage des plis (13), répartis régulièrement sous la surface (45) cette dernière avec de préférence un pas égal à "B-A" ou à son multiple en une ou plusieurs nappes, et communiquant avec la surface de la roue par des conduits d'aspiration (47); les évidements (46) débouchent sur la surface latérale (48) Fig.4 de la roue de regroupage des plis (13) sur laquelle vient s'appliquer une boîte à vide (49) fixe, comprenant une ou plusieurs cavités (50) permettant de faire le vide dans les zones concernées.

La roue de regroupage des plis (13) comporte un dispositif (20) pour coucher les plis et (21) pour les fixer entre eux sur les bords de la bande de film plissée (23); il est important que les plis soient couchés au moment de leur fixation; le dispositif de couchage des plis peut être constitué d'un cylindre (20), en rotation synchronisée avec la roue de regroupage des plis (13), qui les écrase contre la roue de regroupage des plis (13), si on veut des plis parfaitement stabilisés; mais ce peut être des courroies qui viennent en appui sur la roue de regroupage des plis (13) avec sensiblement la même vitesse tangentielle; ce peut être aussi des patins (21) fixés à une de leurs extrémités et qui glissent sur le film plissé (23) en couchant les plis; la fixation des plis entre eux peut se faire par soudure suivant une bande latérale dans la mesure où l'une au moins des faces du film comporte une colle thermo-activable ou un revêtement plastique thermo-soudable. Dans le cas où le film est composé d'un kraft enduit par exemple d'un film polyéthylène sur une face, on opère une fixation provisoire des plis; pour cela on dispose le papier de manière à ce que ce soit la face enduite qui se trouve contre la roue de regroupage des plis (13); on presse les plis contre la roue de regroupage des plis (13) avec une ou plusieurs roulettes étroites situées en série ou une courroie ou un patin chauds de manière à ce que les deux bandes de largeur "A" (51) Fig.3 qui se font face se soudent l'une contre l'autre; on règle la température du dispositif de soudure (21) Fig.4 pour que la partie du film plissé (23) directement en contact avec la roue de regroupage des plis (13) n'atteigne pas la température de fusion du revêtement thermo-soudable grâce aux pertes de chaleur provoquées par ce contact; le choix du mode de soudure décrit dépend essentiellement de la vitesse tangentielle: plus elle est importante plus il faut chercher à prolonger le temps de contact pour permettre la diffusion de la chaleur et plutôt utiliser des courroies ou des patins.

Dans de nombreuses applications on a besoin de pouvoir séparer des longueurs de bande plissée; si "A" est inférieur à "B-A" il y a des zones où il n'y a qu'une épaisseur de film; il est possible de l'utiliser pour séparer les longueurs; mais si "A" est supérieur à "B-A", il n'existe plus de zones où il n'y ait qu'une épaisseur de film; et si on découpe à travers plusieurs épaisseurs, il y a un déchet qu'il n'est pas facile d'éliminer; il faut donc créer une zone sans plis où il n'ait qu'une épaisseur de film.

Dans une variante de l'invention Fig.7 la solution consiste à faire sur la roue de regroupage des plis (53) un pli (54) ou plusieurs plis successifs avant qu'ils n'aient été fixés; et cela chaque fois qu'on a atteint la longueur de film plissé (23) souhaitée. Nous allons décrire ci-dessous le cas où l'on défait un seul pli (53).

La longueur de film plissé (23) souhaitée correspond à un nombre de plis (22) défini constituant un nombre de bandes de largeur "B-A" (16) situées côte à côte sur la roue de regroupage des plis (53); on détermine ainsi des secteurs (55) Fig.8 de roue de regroupage des plis (53) qu'il suffit de rendre mobiles les un par rapport aux autres autour de leur axe de rotation commun (56); au moment du transfert du film (10) sur la roue de regroupage des plis (53), les secteurs (55) et (57) se touchent et forment une surface continue; ensuite le secteur aval (57) s'accélère progressivement et s'éloigne du secteur (55) qui le suit; à ce moment là le pli (54) qui se trouvait au niveau de la ligne de jonction des deux secteurs se défait; on procède alors à la fixation des plis par un dispositif à roulette ou à bande, puis à l'évacuation du film plissé tandis que le premier secteur (55) Fig.8 ralentit sa vitesse pour être progressivement rattrapé par le secteur (58) qui le suit de manière à être en position jointive au moment de recevoir à nouveau du film plissé.

Sur le plan pratique, on réalise l'opération à l'aide d'une roue d'entraînement (59) Fig.8 de la roue de regroupage des plis (53), tournant à vitesse constante, dont l'axe de rotation (60) est parallèle à cette dernière, mais décentré; chaque secteur (55) est manoeuvré par cette roue d'entraînement (59) par l'intermédiaire d'une came (61) sensiblement radiale; lorsque l'organe de contact (62) du secteur (55) avec la came (61) s'éloigne de l'axe de rotation (60) de la roue d'entraînement (59) les secteurs (55) s'éloignent, et dans le cas contraire ils se rapprochent; le calcul du décentrage des roues (53) et (59) se fait de la façon suivante:

Supposons que la longueur de l'emballage corresponde à "N" plis; la longueur de l'emballage et donc du secteur (55) est alors de $N*(B-A)$; si on veut ouvrir un pli (54) Fig.7, les deux secteurs (55) et (57) Fig.8 qui se suivent doivent s'écarter d'une distance de l'ordre de "2A"; si on prend une roue de regroupage des plis (53) avec un nombre "S" de secteurs (55), le point de la roue d'entraînement (59), où l'écartement est maximum, parcourt à chaque tour une distance $S*((N*(B-A))+2A)$; donc $S*(-(N*(B-A))+2A)/(pi)$ est le diamètre du cercle tangent à la roue de regroupage des plis (53), qui lui est tangente intérieurement, centré sur la roue d'entraînement (59) dans laquelle (pi) est la constante du cercle; le point où l'écartement est minimum parcourt la distance $S*N*(B-A)$; donc $S*N*(B-A)/(pi)$ représente le diamètre du cercle tangent intérieurement à la roue de regroupage des plis (53) centré sur la roue d'entraînement (59); si on prend comme hypothèse que les deux points de contacts correspondant à l'ouverture maximum d'une part, et à l'ouverture minimum d'autre part, sont diamétralement opposés, le diamètre "D" de la roue de regroupage des plis (53) est égal à:
$D = (S*N*(B-A)/(pi)) + (S*A/(pi))$. La distance "E" entre les centres des axes (56) et (60) de la roue de regroupage des plis (53) et de la roue d'entraînement (59) est: $E = (D-((S*N*(B-A)/(pi)))/2 = (S*A)/2(pi)$. La roue d'entraînement (59) possède "S" cames (61) sensiblement radiales régulièrement réparties, le long de chacune desquelles se déplace un dispositif de contact (62) solidaire d'un secteur (55) de roue de regroupage des plis (53). La zone de transfert du film (10) de la roue dentée (5) vers la roue de regroupage des plis (53), est la zone où deux secteurs (55) et (57) contigus deviennent jointifs; pendant qu'un secteur (55) se remplit de plis jointifs, il y a, par construction, une variation de vitesse du secteur de roue qui dans un premier temps ralentit et dans un deuxième temps accélère si on considère que la roue d'entraînement (59) va à vitesse constante; cela est dû au fait que la came (61) est radiale; il est possible de modifier légèrement le profil de la came (61) pour obtenir une vitesse stabilisée pendant toute la phase de chargement; ce profil est obtenu en traçant une épure dans laquelle on impose les vitesses relatives des deux roues (53) et (59) afin d'en déduire la forme de la came (61).

Si S = 4 le calcul montre que la variation de vitesse induit une variation de la largeur des bandes (B-A) d'environ plus ou moins 12%; comme (A + B) reste constant par construction, chacune des valeurs A et B varient simultanément mais en sens opposé de plus ou moins 6% si par exemple (B-A) en valeur moyenne vaut 5mm, il oscille en fait entre 4,4mm et 5,6mm; il y a deux critères supplémentaires qui interviennent dans le chiox de "S"; le premier critère est que si "S" est élevé, le diamètre de la roue augmente et on risque d'être gêné à haute cadence par le contact des dents (11) de la roue dentée (5) avec les plis (22) du film déjà transférés sur la roue qui tend à les pousser en avant; ensuite la construction de cette roue risque d'être plus difficile.

Chaque secteur (55) Fig.8 de roue de regroupage des plis (53) comporte une cavité (63) en forme de portion cylindrique de révolution, et est articulé sur l'axe commun (56) des secteurs (55) de la roue de regroupage des plis (53) par une ou plusieurs liaisons rigides (64) tournant librement autour de cet axe (56); cette cavité (63) comporte sur la partie extérieure (65) de sa paroi des perforations destinées à maintenir le film (10) transféré de la roue dentée (5) par aspiration; pour limiter les déperditions de vide, une paroi concentrique (66) à la paroi extérieure (65) forme un espace réduit qui communique avec la cavité principale (67) uniquement dans la zone (68) correspondant au début du transfert de film (10) sur le secteur (55); au fur et à mesure que le secteur (55) se charge, les orifices de vide sont bouchés par le film plissé (23) déposé, la zone d'aspiration principale se déplace et reste dans la zone de transfert où l'on a justement besoin de l'aspiration maximale. La cavité principale (67) de chaque secteur est reliée à la roue d'entraînement (59) par une conduite flexible (69); ce flexible (69) communique avec un orifice (70) situé sur la paroi extérieure latérale de la roue d'entraînement (59); une boîte à vide semblable à la boîte (49) Fig.4 décrite pour la roue dentée et pour la roue de regroupage des plis (13) est appliquée contre la partie latérale extérieure de la roue d'entraînement (59) Fig.8; elle possède une cavité qui permet ou non de mettre les flexibles en communication avec l'aspiration; l'aspiration est déclenchée sensiblement au moment où le secteur (55) étant au contact du secteur (57) qui le précède, est en position de recevoir le film transféré; elle est coupée au moment où le film quitte la roue de regroupage des plis avec ses plis (22) fixés entre eux; les moments précis de déclenchement de ces opérations tiennent compte des temps d'inertie du système; c'est pour diminuer le temps de réponse que le volume des cavités (67) sous vide doit être le plus réduit possible.

Lorsque la roue de regroupage des plis (53) comprend des secteurs (55) mobiles les uns par rapport aux autres, on ne peut pas utiliser d'appareillage de fixation des plis intervenant simultanément sur deux secteurs (55) et (57) successifs parce qu'ils ont des vitesses différentes; on ne peut plus utiliser par exemple de courroies sauf si on admet un glissement; si on veut presser les plis (22) par des rouleaux qui les pressent contre le secteur (55) ou (57) sur lequel ils sont naintenus, on aura des problèmes aux changements de secteur car les vitesses sont différentes, et il est difficile dans ces conditions de synchroniser les vitesses; on préférera utiliser des patins (21) qui glissent sur le film et qui rabattent les plis de manière à pouvoir les fixer provisoirement avec des patins (21) chauffés électriquement; une fois les plis (22) fixés et le film plissé (23) détaché de la roue de regroupage des plis (53), il est possible de le traiter de façon classique.

Dans une variante de l'invention, on modifie les deux roues dentées (71) et (72) de manière à ce que lorsque le nombre de dents successives atteint le nombre de plis, on modifie le profil des dents pour diminuer la longueur de film prise sur un minimum de trois dents successives uniquement dans la zone où se situe le film et où les dents des deux roues dentées (71) et (72) ne sont jamais en contact l'entraînement étant réalisé par les dents non modifiées situées au voisinage des extrémités latérales (33) et (34) Fig.4 des dents comme indiqué précédemment, qui restent en contact afin de permettre l'entraînement des roues et qui ne sont pas modifiées; pour faciliter la compréhension, supposons par exemple que nous ayons un emballage de 20 plis (soit N plis) avec (B-A) = A/2 et que nous voulions avoir un espace ne comportant qu'une épaisseur dont la longueur est de l'ordre de 2A; il suffit sur la roue dentée d'entraînement (71) Fig.9 qui permettrait de plisser, par exemple, deux emballages ( soit P emballages au tour, de prévoir au niveau de l'entraînement latéral 44 dents (soit (N + 2)*P dents); ensuite on supprime le creux entre 3 dents successives de manière à ce que le film (10) épouse, par exemple, le profil extérieur (73) de la roue dentée d'entraînement (71); puis on reprend une série de 19 dents (soit N-1) et enfin on supprime à nouveau le creux entre 3 dents successives; la deuxième roue dentée (72) peut avoir le même nombre de dents que la roue dentée d'entraînement (71), et il suffit de supprimer deux dents toutes les 20 dents au droit de celles dont le creux a été supprimé tout en les gardant dans les zones latérales pour permettre la continuité de l'entraînement. Au niveau de la roue de regroupage des plis (74) Fig.10 qui est monobloc, comme dans le cas où l'on ne fait pas de zones de séparation, on peut prévoir, par exemple quatre secteurs (75) (soit Q secteurs) correspondant chacun à un emballage de 20 plis; sur chaque secteur on prévoit 21 zones (soit (N + 1)) de largeur (B-A) (76) puis une zone (77) en creux de largeur (B-A); cette zone (77) Fig.11 comporte une aspiration (78) à sa base qui permet de faire entrer le film (10) correspondant à la zone (73) aux 3 dents dont on a supprimé le creux; sa profondeur doit être suffisante pour que le film (10) puisse s'y loger, au cours du transfert, sans faire de plis; enfin on continue avec un nouveau secteur comportant 21 zones (soit N + 1 zones) de largeur (B-A); la roue de regroupage des plis comporte donc 88 zones (soit Q*(N + 2) zones) de largeur (B-A) (76) ce qui permet de définir son périmètre et son diamètre. La roue de regroupement des plis (74) comporte au niveau des secteurs (75) un dispositif d'aspiration (79) présentant les mêmes caractéristique que le système d'aspiration (14) Fig.6 précédemment décrit.

Le transfert du film (10) entre la roue dentée (5) Fig.4 et la roue de regroupage des plis (13) se fait à la volée puisque les deux roues (5) et (13) tournent à des vitesses différentes et constantes; il est possible de rendre la vitesse variable sur une des deux ou sur les deux roues pour que les vitesses tangentielles des roues soient égales au moment du transfert du film (10) de l'une sur l'autre; il existe des solutions mécaniques et des solutions électroniques pour résoudre ce problème; mais compte tenu des inerties en jeu, du fait des cadences, c'est une solution que l'on n'emploiera que lorsqu'on aura épuisé les posssibilités de transfert à la volée; notamment dans le cas où l'espace est créé par l'obturation du creux dans au moins trois dents successives, on peut augmenter la vitesse de la roue de regroupage des plis (13) au moment du transfert de la zone non plissée de manière à éviter d'avoir à réaliser les zones (77) en creux.

On peut dans une variante de l'invention effectuer la découpe des longueurs de film plissé directement sur la roue dentée (5); une façon de procéder consiste à supprimer partiellement les creux entre trois dents ainsi que la dent qui les sépare pour le ramener au diamètre primitif de la roue (5) et supprimer partiellement les deux dents correspondantes de la roue dentée (31) ainsi que le creux qui les sépare, pour ramener aussi cette zone à son diamètre primitif; on peut alors doter cette zone de couteaux qui vont découper totalement ou partiellement le film par pression ou cisaillement;

cette zone de découpe se retrouve dans le film plissé à cheval sur trois plis et peut alors être escamotée dans un creux (77) de la roue de regroupage des plis.

Le procédé, que nous venons de décrire, utilise principalement une roue dentée dont le film à plisser épouse la forme; le sommet de la dent permet de déterminer les bandes de largeur "B-A"; le film ainsi préformé est transféré à la volée sur une roue de regroupage des plis qui permet de positionner côte à côte les bandes de largeur "B-A"; ce transfert à la volée est une source d'incertitude en ce qui concerne la fiabilité du transfert donc de la cadence de la machine.

Dans la variante de l'invention qui suit nous décrivons un système mécanique de rapprochement continu des plis.

On a décrit Fig.8 un dispositif permettant de redéployer un pli sur la roue de regroupement des plis de façon à créer une zone où il n'y ait qu'une seule épaisseur de film; l'objet de la variante de l'invention que nous allons décrire est d'appliquer ce même principe pour le regroupement des plis sous forme d'un dispositif situé entre la roue dentée (107) Fig.12 de préformage des plis et la roue de regroupement des plis (108).

Nous allons décrire, dans un premier temps, le cas simple d'une roue dentée (107) Fig.12 qui préforme des plis en continu sans encore aborder le problème des zones sans plis. Les zones (109) situées à la racine des dents (110) permettent de constituer les bandes (4) Fig.2 de largeur "B-A" sur le film (111) Fig.12; les dents (110) constituent la zone correspondant au "V" renversé (3) Fig.2; le film (111) Fig.12 est maintenu en place par dépression par des orifices (112) à la base des dents comme décrit précédemment; les dents (110) peuvent former une arête (113) à leur sommet pour permettre de mieux marquer le pli qui séparera au sommet du "V" renversé (3) Fig.2 les deux bandes (2) de largeur "A". On peut remarquer que précédemment les zones de largeur "B-A" étaient au contraire formées par le sommet des dents.

Une roue de resserrage des plis (114) Fig.12 formée de secteurs mobiles (115), les uns par rapport aux autres, en rotation autour d'un axe commun (116) prend chaque pli (117) de film sur la roue dentée (107) au pas de la roue dentée (107),puis au fur et à mesure qu'elle tourne les secteurs (115) se rapprochent pour devenir sensiblement jointifs dans la zone diamétralement opposée (118) où elle devient sensiblement tangente à la roue de regroupement des plis (108) qui tourne à la même vitesse que celle des secteurs (115) lorsqu'ils passent dans cette zone (118).

Chacun de ces secteurs (115) Fig.13 a une largeur (119) en son sommet sensiblement égale à "B-A". Lorsqu'ils sont au voisinage de la roue dentée (107) l'écartement entre deux secteurs (115) successifs est celui du pas (120) de la roue dentée (107); l'axe (116) est positionné de manière à ce que les secteurs (115) viennent, au cours de la rotation, sensiblement tangenter le fond (109) situé entre les deux dents (110) correspondantes comme le ferait une roue dentée venant s'y engrener; entre chaque secteur (115) il y a une aspiration d'air, qui permet d'aspirer le pli (117) qui recouvrait la dent (110) et qui vient se loger entre deux secteurs (115) successifs tandis que la bande (4) Fig.2 de largeur "B-A" qui recouvrait le fond (109) Fig.12 situé entre deux dents (110) successives, vient s'appliquer sur le sommet du secteur (115) mobile de largeur "B-A" de la roue de resserrage des plis (114); lorsque la roue de resserrage des plis (114) continue de tourner, les secteurs (115) consécutifs se rapprochent les uns des autres en fermant le pli (117) situé entre les secteurs (115) consécutifs; il arrive un moment où ces secteurs (115) sont sensiblement côte à côte; c'est le moment pour transférer le film dont le pli (117) en forme de "V" renversé est refermé, sur la roue de regroupage des plis (108) qui tourne à la vitesse convenable pour que les vitesses tangentielles des secteurs (115) et de la roue de regroupement des plis (108) soient sensiblement égales; la dépression entre les secteurs (115) successifs n'agit pratiquement plus sur le pli (117) puisque les secteurs (115) sont pratiquement jointifs; en contrepartie la zone (121) de largeur (119) Fig.13 "B-A" située au sommet du secteur est aspirée par la roue de regroupement des plis (108) Fig.12 qui est un cylindre perforé de trous (122) par lesquels l'air est aspiré comme cela a été précisément décrit précédemment.

Le calcul de la roue de resserrage des plis (114) se fait comme décrit précédemment; lorsque les secteurs (115) de largeur "B-A" sont écartés au maximum; ils ont le pas "P" (120) de la roue dentée (107); si on a "N" secteurs (115), le périmètre de la roue d'entraînement (123) à ce niveau d'écartement (120) est égal à N*P et le diamètre à N*P/(pi); lorsque les secteurs (115) sont resserrés le diamètre de la roue d'entraînement (123) à ce niveau est (B-A)*N/(pi); le diamètre de la roue de resserrage des plis (114) comportant les N secteur est (N*P + (B-A)*N)/(2*(pi)); la distance entre le centre (116) de la roue de resserrage des plis (114) et le centre (140) de la roue d'entraînement (123) est ((B-A)*N/(2*(pi))-(N*P + (B-A)*N)/(4*(pi)))

Il est préférable qu'il y ait une roue d'entraînement (123) de part et d'autre de la roue de resserrage des plis (114); ces deux roues (123) sont synchronisées et peuvent être entraînées en rotation par la roue dentée de préformage des plis (107).

Les secteurs (115) comportent à leurs extrémités des tourillons (124) Fig.13 qui coulissent dans des gorges radiales (125) de la roue d'entraînement (123); le vide peut être amené à travers la roue d'entraînement (123) Fig.14 par l'intermédiaire d'un tube (126), qui aspire l'air entre les secteurs (115), qui passe à travers la zone axiale fixe (141) commune aux deux axes (116) et (140); dans une version préférée de l'invention, les secteurs (115) sont constitués de barres (127) à section sensiblement trapézoidale fixées à au moins un disque (128) qui lui est perpendiculaire, et qui est articulé sur un tube cylindrique de révolution (129) Fig.14, autour de l'axe (116), qui véhicule l'air aspiré entre les secteurs (115) à travers des orifices (130) et qui est évacué ensuite par le tube (126) avec lequel il est en communication. dans une variante l'air peut être aspiré à travers la roue (114) par la zone qui n'est pas recouverte par le film.

Dans une version préférée de l'invention, afin de limiter le frottement des disques (128) sur le tube (129), ce dernier est monté sur roulements de manière à ce qu'il puisse tourner librement autour de son axe (116); dans ces conditions il tourne sensiblement à la vitesse de la roue d'entraînement (123) et les disques (128) en rotation ont des déplacements par rapport à ce tube (129) de quelques centimètres de part et d'autre d'une position moyenne.

Si on veut créer un espace sans pli tous les "N" plis, il suffit comme indiqué précédemment dans le brevet de supprimer par exemple une dent tous les N plis Fig.15 en construisant une roue dentée (131) qui ait un nombre entier de fois N dents (133) séparées par une zone (132) sans dents; cette zone peut correspondre à la suppression d'une ou plusieurs dents (133) ou bien être de dimension arbitraire; la roue de resserrage des plis (134) comporte par exemple N secteurs (135) de largeur sensiblement égale à "B-A" plus un secteur (136) de largeur sensiblement égale à "P + (B-A)" si on a choisi de supprimer une dent (133); et on recommence les calculs précédents en tenant compte qu'un des secteurs (136) a une largeur différente. Les gorges (137) de la roue d'entraînement (138) dans lesquelles vont coulisser les tourillons (124) Fig.13 ne seront plus radiale si ce n'est celle du secteur (136) le plus large et éventuellement celle qui lui est diamétralement opposée; l'orientation des gorges (137) et éventuellement leur forme se détermine par des épures. Le mode de synchronisation des roues d'entraînement (138) reste le même et cela ne change rien à la roue de regroupage des plis (139) qui garde la même forme. La roue de regroupage des plis (139) reste identique à celle décrite précédemment qui est décrite comme étant constituée d'une surface cylindrique; elle permet par conséquent d'effectuer toutes les opérations de couchage, de préfixation des plis et éventuellement comporter des courroies permettant d'assurer le guidage du film plissé en sortie de roue. On peut bien évidemment avoir plusieurs zones sans dents (132), sur la roue dentée, auxquelles correspondent sur la roue de resserrage des plis un ou plusieurs secteurs (136).

La zone (132) Fig.15 que nous avons décrit comme étant obtenue par la suppression d'une dent peut être remplacée par une zone formée d'une succession de dents (133) de pas (120) Fig.12 différent; cela conduit à définir des secteurs (115) pouvant avoir des largeurs différentes, et auxquels correspond une roue dentée (107) de préformage et une roue dentée de contreformage ayant des dents de pas différent correspondant chacune à un secteur particulier de la roue de resserrage des plis (134) Fig.15.

L'aspiration sur la roue de resserrage des plis (134) Fig.15 peut se faire à travers la zone qui est diamétralement opposée à celle qui est recouverte par le papier; il s'agit de la partie de la roue de resserrage des plis (134), non recouverte par le papier, située entre la zone de déchargement du papier sur la roue de regroupage des plis et la zone de prise du papier sur la roue de préformage des plis, pris dans le sens de rotation de la roue de resserrage des plis; une simple goulotte d'aspiration peut aspirer sur toute la surface de cette zone.

**Revendications**

1. Dispositif de plissage en continu d'une feuille mince, comprenant une roue dentée (5) réalisant le préformage des plis d'un film (10) positionne pour en épouser la forme des dents (11) à l'aide d'une deuxième roue dentée (31) et d'un dispositif de maintien par le vide, caractérisé en ce que les plis du film (10) préformés par les roues dentées (5,31) sont transférés directement sur une roue de regroupage des plis (13), tournant moins vite que la roue dentée (5), munie d'un dispositif d'aspiration (14), de manière que les zones (16) du film, qui sont au sommet (7) des dents, se retrouvent sensiblement côte à côte, reliées par des plis (22), aplatis par un rouleau (20) pour constituer une bande de film plissée (23).

2. Dispositif suivant la revendication 1, caractérisé en ce que le film (10) est maintenu sur les dents (11) de la roue dentée (5) et au fond des gorges (30) par un dispositif d'aspiration d'air (12,37) situé à fond de gorge (30) et au niveau des dents (38).

3. Dispositif suivant les revendications 1 et 2, caractérisé en ce que la deuxième roue dentée (31), synchronisée mécaniquement avec la roue dentée (5), aide le film (10) à pénétrer au fond de la gorge (30).

4. Dispositif suivant les revendications 1 et 2, caractérisé en ce que les dents (11) sont à développante de cercle, qu'elles engrènent normalement sur les bords (33,34) des roues dentées (5,31) hors de la zone occupée par le film (10) et que leur profil est modifié dans leur zone centrale occupée par le film (10), pour qu'elles ne soient plus en contact et que le film ne soit pas pincé dans certaines zones et qu'elles soient en contacts privilégiés dans d'autres zones pour notamment faire des rainages et des découpes.

5. Dispositif suivant la revendication 1, caractérisé en ce que les bandes de film de largeur "B-A" (16) sont maintenues en place, sur la roue de regroupage des plis (13), par le système de mise en dépression (14) relié à une boîte à vide (49).

6. Dispositif suivant la revendication 1, caractérisé en ce que la roue de regroupage des plis (53) comporte des secteurs (55), mobiles les uns par rapport aux autres autour d'un axe commun (56), dont les mouvements relatifs sont commandés par une roue d'entraînement (59), tournant autour d'un axe (60) décentré et parallèle par rapport au premier, à laquelle elle est reliée par l'intermédiaire de cames (61) et qui permet de déployer un ou plusieurs plis (54) de manière à créer sur le film plissé (23) des zones où il n'y a qu'une seule épaisseur de film, afin de séparer facilement des longueurs de film plissé.

7. Dispositif suivant la revendication 6, caractérisé en ce que chaque secteur (55) comporte une cavité de vide (63), reliée à la roue d'entraînement (59) par une tuyauterie flexible qui la met en communication avec une boîte à vide (49), comportant une paroi (66) permettant d'assurer un débit d'aspiration maximum au voisinage de la zone de transfert des plis à partir de la roue dentée (5).

8. Dispositif suivant les revendications 1 à 5, caractérisé en ce que le dispositif permettant de créer une zone n'ayant qu'une épaisseur de film, est obtenu en supprimant, sur la roue (71), dans la zone centrale où se trouve le film, les gorges séparant au moins trois dents successives par une surface (73) ayant une développée plus faible à laquelle correspond, sur la roue de regroupage des plis (74), une zone (77) en creux, munie d'un dispositif d'aspiration (78), dans lequel vient se loger le film, afin de constituer la zone n'ayant qu'une seule épaisseur de film.

**9.** Dispositif suivant la revendication 1, caractérisé en ce que les plis, une fois qu'ils sont regroupés sur la roue de regroupage des plis, sont couchés, soit par les rouleaux (20) qui les écrasent contre la roue de regroupage des plis (13), soit par des courroies, soit par des patins (21).

**10.** Dispositif suivant l'une quelconque des revendications précédentes, caractérisé en ce que les plis du film (10) pouvant comporter une couche de matière thermo-soudable ou thermo-activable sont fixés entre eux par soudure, à l'aide d'une ou plusieurs roues étroites chauffées électriquement, ou par des patins chauffés électriquement frottant sur le film, ou par des courroies chauffées électriquement directement ou indirectement venant s'appliquer sur le film plissé.

**11.** Dispositif suivant l'une quelconque des revendications 1 à 7 et 9,10, caractérisé en ce que les plis préformés sur la roue dentée (107) sont d'abord transférés sur une roue de resserrage des plis (114) constituée de secteurs (115), mobiles autour d'un axe (116), venant sensiblement tangenter le fond des gorges (109) de largeur sensiblement égale à "B-A" de la roue dentée (107), au même pas (120) que cette dernière et à la même vitesse tangentielle, afin d'y prélever le film par dépression atmosphérique de manière que le pli (117) recouvrant la dent (110) vienne se loger entre deux secteurs (115) consécutifs qui ensuite, au cours de la rotation, se rapprochent les uns des autres pour fermer progressivement le pli (117) afin de transférer le film sur la roue de regroupage des plis (108), qui est sensiblement tangente à la roue de resserrage des plis (114) et tourne sensiblement à la même vitesse tangentielle, de manière que les bandes de largeur "B-A" soit sensiblement côte à côte.

**12.** Dispositif suivant la revendication 11, caractérisé en ce que la roue de resserrage des plis (114) est entraînée par la roue d'entraînement (123) synchronisée avec la roue dentée (107) et la roue de regroupage des plis (108), de centre (140) différent du centre (116) de rotation de la roue de resserrage des plis (114), par l'intermédiaire de tourillons (124) solidaires des secteurs (115) coulissant dans des gorges (125) solidaires de la roue d'entraînement (114).

**13.** Dispositif suivant la revendication 12, caractérisé en ce que le diamètre de la roue de resserrage des plis (114) comportant N secteurs (115) identiques est $(N*P + (B-A)*N)/ (2*(pi))$, la distance entre le centre (116) de la roue de resserrage des plis (114) et le centre (140) de la roue d'entraînement (123) est sensiblement égal à $((B-A) *N/(2* (pi))-(N*P + (B-A)*N)/(4*(pi))$.

**14.** Dispositif suivant l'une quelconque des revendications 11 à 13, caractérisé en ce que chaque secteur (115) est constitué d'un barreau à section sensiblement trapézoïdale relié à au moins un disque (128) qui lui est perpendiculaire tournant fou sur un tube (129) d'axe (116).

**15.** Dispositif suivant la revendication 14, caractérisé en ce que le tube (129) tourne fou autour de son axe (116).

**16.** Dispositif suivant l'une quelconque des revendications 14 et 15, caractérisé en ce que l'air est aspiré, de l'espace situé entre les secteurs (115) consécutifs, à l'intérieur du tube (129) soit par l'intermédiaire d'orifices (130), puis évacué par un tube (126) à travers la zone axiale (141) de support des axes (116,140) des deux roues, soit directement à travers la roue par aspiration dans la zone non recouverte par le film.

**17.** Dispositif suivant l'une quelconque des revendications 10 à 17, caractérisé en ce qu'il est possible de créer une zone sans plis en créant sur la roue dentée au moins une zone (132), ne comportant pas de dents, de largeur supérieure à "B-A", à laquelle correspond au moins un secteur (136) de largeur correspondante, sur la roue de resserrage des plis (114), avec lequel elle est synchronisée.

**18.** Dispositif suivant la revendication 12, caractérisé en ce que la roue d'entraînement (123) est elle-même entraînée directement par la roue dentée (107) par l'intermédiaire d'un engrenage.

**Claims**

**1.** Device for continuously pleating a thin sheet and including a toothed wheel (5) embodying the preforming of a film (10) positioned in such a way as to marry the shape of the teeth (11) with the aid of a second toothed wheel (31) and a vacuum retention device, wherein the folds of the film (10) preformed by the toothed wheels (5, 31) are directly transferred onto a fold regrouping wheel (13) rotating slower than the toothed wheel (5) and provided with a suction device (14) so that the zones (16) of the film at the top (7) of the teeth are located approximately side by side connected by folds (22) flattened by a roller (20) so as to constitute a pleated film strip (23).

2. Device according to claim 1, wherein the film (10) is kept on the teeth (11) of the toothed wheel (5) and at the bottom of throats (30) by means of a air suction device (12, 37) situated at the throat bottom (30) and at the level of the teeth (38).

3. Device according to claims 1 and 2, wherein the second toothed wheel (31), synchronized mechanically with the toothed wheel (5), helps the film (10) to penetrate to the bottom of the throat (30).

4. Device according to claims 1 and 2, wherein the teeth (11) are involute to a circle which they normally gear on the edges (33, 34) of the toothed wheels (5, 31) outside the zone occupied by the film (10) and wherein their profile is modified in their central zone occupied by the film (10) so that they are no longer in contact and wherein the film is not cramped in certain zones and wherein they are in overriding contact in other zones so as in particular make groovings and cuttings.

5. Device according to claim 1, wherein the film strips (16) with a width "B-A" are kept in place on the fold regrouping wheel (13) by the partial vacuum system (14) connected to a vacuum box (49).

6. Device according to claim 1, wherein the fold regrouping wheel (53) comprises sectors (55) with some being mobile with respect to the others around a common axis (56) and whose relative movements are controlled by a drive wheel (59) rotating around an axis (60) offset and parallel with respect to the first axis to which it is connected by means of shims (61) and making it possible to deploy one or several folds (54) so as to create on the pleated film (23) zones where there is only a single film thickness so as to easily separate the lengths of the pleated film.

7. Device according to claim 6, wherein each sector (55) comprises a vacuum cavity (63) connected to a drive wheel (59) by a flexible pipe which places it in communication with a vacuum box (49) comprising a wall (66) able to provide a maximum suction flow close to the zone for transferring the folds from the toothed wheel (5).

8. Device according to claim 1 to 5, wherein the device able to create a zone having only one film thickness is obtained by suppressing on the wheel (71) in the central zone where the film is located the throats separating at least three successive teeth by a surface (73) having a smaller evolute which, on the fold regrouping wheel (74), corresponds to a hollow zone (77) provided with a suction device (78) in which the film is housed so as to constitute the zone having a single film thickness.

9. Device according to claim 1, wherein the folds, once they are regrouped on the fold regrouping wheel, are laid down, either by the rollers (20) which crush them against the fold regrouping wheel (13), or by belts or by blocks (21).

10. Device according to any one of the preceding claims, wherein the folds of the film (10) possibly comprising a heat-sealing or heat-activable layer are interconnected by weld seam with the aid of one or several electrically heated narrow wheels rubbing on the film, or by directly or indirectly heated belts being applied to the pleated film.

11. Device according to any one of claims 1 to 7 and 9 and 10, wherein the preformed folds on the toothed wheel (107) are first of all transferred onto a fold confining wheel (114) formed of mobile sectors (115) moving around an axis (116) approximately tangenting the bottom of the throats (109) with a width approximately equal to "B-A" of the toothed wheel (107) with the same pitch (12) as the latter and at the same tangential speed so as to pick up from it the film by means of atmospheric depression so that the fold (117) covering the tooth (110) is housed between two consecutive sectors (115) which during rotation then draw close to one another so as to progressively close the fold (117) in order to transfer the film onto the fold regrouping wheel (108) which is approximately tangent to the fold confining wheel (114) and rotates approximately at the same tangential speed so that the strips with a width "B-A" are approximately side by side.

12. Device according to claim 11, wherein the fold confining wheel (114) is driven by the drive wheel (123) synchronized with the toothed wheel (107) and the fold regrouping wheel (108) with a center (140) differing from the center (116) of rotation of the fold confining wheel (114) by means of bearing journals (124) integral with the sectors (115) sliding in throats (125) integral with the drive wheel (114).

**13.** Device according to claim 12, wherein the diameter of the fold regrouping wheel (114) comprising N identical sectors is (N*P + (B-ZA)*N) / (2*(pi)), the distance between the center (116) of the fold regrouping wheel (114) and the center (1540) of the drive wheel (123) being approximately equal to ((B-A)*N/(2* (pi))-(N*P + - (B-A)*N)/(4*(pi)).

**14.** Device according to any one of claims 11 to 13, wherein each sector (115) is formed of a bar with an approximately trapezoidal section connected to at least one disk (128) which is perpendicular to it rotating idle on a tube (129) of the axis (116).

**15.** Device according to claim 14, wherein the tube (129) rotates idle around its axis (116).

**16.** Device according to claim 14 or 15, wherein the air is sucked up from the space situated between the consecutive sectors (115) inside the tube, either by means of orifices (130) and then removed by a tube (126) through the axial support zone (141) of the axes (116, 140) of the two wheels, or directly through the wheel via suction in the zone not covered by the film.

**17.** Device according to any one of claims 10 to 17, wherein it is possible to create a zone without folds by creating on the toothed wheel at least one zone (132) not comprising any teeth and with a width larger than "B-A" and which corresponds to at least one sector with a corresponding width on the fold confining wheel (114) with which it is synchronized.

**18.** Device according to claim 12, wherein the drive wheel (123) is itself driven directly by the toothed wheel (107) by means of a gear train.

**Patentansprüche**

**1.** Vorrichtung zum durchgehenden Falten einer dünnen Folie, bestehend aus einer Zahnwalze (5) zum Vorformen der Falten einer eingeführten Folie (10) zu deren Formgebung entsprechend der Form der Zähne (11) der Walze mit Hilfe einer zweiten Zahnwalze (31) und einer Vorrichtung zum Festhalten durch Unterdruck, dadurch gekennzeichnet, daß die mit den Zahnwalzen (5, 31) gebildeten Falten der Folie (10) direkt auf eine Walze zum Zusammenfassen der Falten (13) übertragen werden, die sich langsamer dreht als die Zahnwalze (5) und mit einer Ansaugvorrichtung (14) versehen ist, sodaß die Bereiche (16) der Folie, die sich an der Spitze (7) der Zähne befinden, weitgehend aneinander liegen und durch mit einer Walze (20) flachgepreßte Falten (22) miteinander verbunden sind, sodaß ein gefalteter Folienstreifen (23) gebildet wird.

**2.** Vorrichtung nach Patentanspruch 1, dadurch gekennzeichnet, daß die Folie (10) durch eine in den Hohlkehlen (30) und an den Zähnen (38) angreifende Luftansaugvorrichtung (12,37) auf den Zähnen (11) und in den Hohlkehlen (30) der Zahnwalze festgehalten wird.

**3.** Vorrichtung nach Patentanspruch 1 und 2, dadurch gekennzeichnet, daß die zweite, mit der ersten Zahnwalze (5) mechanisch synchronisierte Zahnwalze (31) dazu dient, die Folie in die Hohlkehle (30) einzudrücken.

**4.** Vorrichtung nach Patentanspruch 1 und 2, dadurch gekennzeichnet, daß die Evoluten der Zähne (11) Kreissegmente bilden und normalerweise an den Rändern (33, 34) der Zahnwalzen (5, 31) außerhalb des von der Folie (10) berührten Bereichs angreifen und ihr Profil im von der Folie (10) berührten Mittelbereich so geändert ist, daß sie nicht mehr miteinander in Berührung sind und die Folie in bestimmten Bereichen nicht eingeklemmt wird, sondern daß sie vorzugsweise in anderen Bereichen - insbesondere zur Bildung von Rillen und Ausschnitten - miteinander in Berührung sind.

**5.** Vorrichtung nach Patentanspruch 1, dadurch gekennzeichnet, daß die Folienstreifen der Breite "A-B" (16) auf der Faltengruppierwalze (13) mit einer an einen Vakuumbehälter (49) angeschlossenen Unterdruckvorrichtung (14) festgehalten werden.

**6.** Vorrichtung nach Patentanspruch 1, dadurch gekennzeichnet, daß die Faltengruppierwalze (53) Sektoren (55) aufweist, die auf einer gemeinsamen Achse (56) gegeneinander verdrehbar sind und deren Relativbewegungen zueinander von einem Antriebsrad (59) gesteuert wird, das sich um eine Achse (60) dreht, die dezentral und parallel zur ersteren Achse verläuft und mit der das Antriebsrad über Nokken (61) verbunden ist, sodaß eine oder mehrere Falten (54) geöffnet werden können, um auf dem gefalteten Folienstreifen (23) Bereiche zu bilden, in denen nur eine Folienschicht vorhanden ist, damit bestimmte Längen gefalteter Folienstreifen leicht voneinander getrennt werden können.

7. Vorrichtung nach Patentanspruch 6, dadurch gekennzeichnet, daß jeder Sektor (55) eine unter Vakuum stehende Aushöhlung (63) aufweist, die über einen an einen Vakuumbehälter (49) angeschlossenen Schlauch mit dem Antriebsrad (59) verbunden ist und eine Wand (66) aufweist, mit der eine Saugleistung in dem Bereich erzielt wird, der sich in der Nähe des Zone des Überwechselns der Falten von der Zahnwalze (5) auf die Faltengruppierwalze (13) befindet.

8. Vorrichtung nach Patentanspruch 1 bis 5, dadurch gekennzeichnet, daß die Vorrichtung zur Bildung eines Bereichs mit nur einer Folienschicht dadurch gebildet wird, daß auf der Zahnwalze (71) im Mittelbereich, in dem sich die Folie befindet, die Hohlkehlen weggelassen werden, die mindestens drei aufeinanderfolgende Zähne durch eine Fläche (73) mit geringerer Evolute voneinander trennen, welcher auf der Faltengruppierwalze (74) eine Hohlstelle (77) entspricht, die mit einer Ansaugvorrichtung (78) versehen ist, in der die Folie zu liegen kommt und so die Stelle des Streifens mit nur einer Folienschicht bildet.

9. Vorrichtung nach Patentanspruch 1, dadurch gekennzeichnet, daß die Falten, nachdem sie auf der Faltengruppierwalze (13) zusammengefaßt sind, durch sie gegen die Faltengruppierwalze (13) pressende Rollen (20), durch Riemen oder durch Gleitschuhe (21) flachgelegt werden.

10. Vorrichtung nach einem der obengenannten Patentansprüche, dadurch gekennzeichnet, daß die Falten der Folie (10), die eine Schicht aus wärmeschweißbarem oder wärmeaktivierbarem Material aufweisen kann, durch eine Schweißnaht miteinander verbunden werden, die mit einem oder mehreren elektrisch erhitzten schmalen Rädern, elektrisch erhitzten, über die Folie streifenden Gleitschuhen oder direkt oder indirekt elektrisch erhitzten Riemen, die sich an die gefaltete Folie drücken, gebildet wird.

11. Vorrichtung nach einem der Patentansprüche 1 bis 7 und 9, 10, dadurch gekennzeichnet, daß die auf der Zahnwalze (107) vorgeformten Falten zuerst auf eine Faltenschließwalze (114) gelangen, die aus Sektoren (115) besteht, die beweglich um eine Achse (116) angeordnet ist und weitgehend die Hohlkehle (109) tangential über eine Breite berührt, die der Breite "B-A" der Zahnwalze (107) entspricht, wobei sie sich mit derselben tangentialen Geschwindigkeit dreht, sodaß die Folie durch atmosphärischen Unterdruck davon abgehoben wird und die den Zahn (110) überdeckende Falte (117) zwischen zwei aufeinanderfolgenden Sektoren (115) zu liegen kommt, die sich bei der weiteren Drehung der Walze aneinanderlegen, um die Falte (117) nach und nach zu schließen, wonach die Folie auf die Faltengruppierwalze (108) gelangt, die weitgehend tangential zur Faltenschließwalze (114) angeordnet ist und sich weitgehend mit derselben tangentialen Geschwindigkeit dreht, sodaß die Streifen der Breite "B-A" weitgehend nebeneinander liegen.

12. Vorrichtung nach Patentanspruch 11, dadurch gekennzeichnet, daß die Faltenschließwalze (114) von dem Antriebsrad (123) angetrieben wird, das mit der Zahnwalze (107) und der Faltengruppierwalze (108) synchronisiert ist, deren Drehachse (140) jedoch über fest mit den Sektoren (115) verbundene Nippel (124), die in den fest mit dem Antriebsrad verbundenen Hohlkehlen (125) gleiten, von der Drehachse (116) der Faltenschließwalze (114) abweicht.

13. Vorrichtung nach Patentanspruch 12, dadurch gekennzeichnet, daß der N identische Sektoren (115) aufweisende Durchmesser der Faltenschließwalze (114) $[N*P + (B-A)*N] / [2*\pi]$ beträgt, während der Abstand zwischen dem Drehpunkt (116) der Faltenschließwalze (114) und dem Drehpunkt (140) des Antriebsrades (123) weitgehend den Wert $[(B-A)*N] / [2*\pi] - [N*P + (B-A)*N] / [4*\pi]$ besitzt.

14. Vorrichtung nach einem der Patentansprüche 11 bis 13, dadurch gekennzeichnet, daß jeder Sektor (115) aus einem Stab mit weitgehend trapezförmigem Querschnitt besteht, der mit mindestens einer Scheibe (128) verbunden ist, die sich senkrecht zu ihm frei auf einem als Drehachse (116) dienenden Rohr (129) dreht.

15. Vorrichtung nach Patentanspruch 14, dadurch gekennzeichnet, daß sich das Rohr (129) frei um seine Achse (116) dreht.

16. Vorrichtung nach einem der Patentansprüche 14 und 15, dadurch gekennzeichnet, daß die Luft aus dem Zwischenraum zwischen den aufeinanderfolgenden Sektoren (115) ins Innere des Rohrs (129) entweder über Öffnungen (130) angesaugt und anschließend über ein Rohr (126) durch den axialen Bereich (141) der Lager für die Achsen (116, 140) von Faltenschließwalze und Antriebsrad abgeführt oder direkt durch die Walze hindurch in dem nicht von der Folien bedeckten Bereich angesaugt wird.

17. Vorrichtung nach einem der Patentansprüche 10 bis 17, dadurch gekennzeichnet, daß die Möglichkeit besteht, einen Bereich ohne Falten zu bilden, indem auf der Zahnwalze mindestens ein zahnfreier Bereich (132) mit einer Breite über "B-A" gebildet wird, dem mindestens ein Sektor (136) mit entsprechender Breite auf der Faltenschließwalze (114) entspricht, mit der sie synchronisiert ist.

18. Vorrichtung nach Patentanspruch 12, dadurch gekennzeichnet, daß das Antriebsrad (123) selbst über ein Getriebe von der Zahnwalze (107) direkt angetrieben wird.

Fig 1

Fig 2

Fig 3

Fig 4

Fig.5

Fig 8

Fig.6

Fig.7

Fig. 9

Fig. 11

Fig 10

Fig 12

Fig 13

Fig. 14

Fig. 15